# EUROPEAN PATENT APPLICATION

(11) **EP 4 685 051 A1**
(43) Date of publication of application: **28.01.2026**
(21) Application number: 24315357.4
(22) Date of filing: 25.07.2024
(51) Int. Cl.: B64C 27/00, B64C 27/57, B64C 27/82, B64D 45/00

(54) **A ROTORCRAFT WITH AN UNANTICIPATED YAW PREVENTION SYSTEM**

(71) Applicant: AIRBUS HELICOPTERS, 13725 Marignane Cedex (FR); AIRBUS HELICOPTERS DEUTSCHLAND GmbH, 86609 Donauwörth (DE)
(72) Inventor: DAVIOS ROLLAND, Eva, 13127 Vitrolles (FR); BACHMANN, Camille, 86609 Donauwörth (DE)
(74) Representative: GPI Brevets

(57) **Abstract**

The present technology relates to a rotorcraft (1) with an unanticipated yaw prevention system (50) for preventing unanticipated yaw of the rotorcraft (1) in flight condition. In one embodiment, alerting means are configured for alerting in hover condition of the rotorcraft (1) at least a pilot of the rotorcraft (1) about an unanticipated yaw risk. In another embodiment, the alerting means are configured to alert at least a pilot of the rotorcraft (1) if a current yaw rate of the rotorcraft (1) exceeds a predetermined yaw rate threshold, and corrective measure indicating means are configured to indicate at least one corrective measure, in particular a pilot action on a yaw control member, adapted for preventing unanticipated yaw of the rotorcraft (1) in the flight condition if the current yaw rate exceeds the predetermined threshold.

## Description

The present technology relates to a rotorcraft comprising a main rotor that is at least configured to provide lift in flight condition of the rotorcraft, an anti-torque rotor that is at least configured to provide counter-torque for yaw movement control in the flight condition, and a yaw control member that is linked to the anti-torque rotor for commanding thrust generation of the anti-torque rotor.

A rotorcraft, such as e. g. a helicopter, with a main rotor, an anti-torque rotor, and a yaw control member is generally susceptible to occurrence of an unanticipated yaw phenomenon in flight condition. An unanticipated yaw phenomenon consists in a sudden and unexpected behavior of a given helicopter in flight condition which occurs when the helicopter's yaw control member is not correctly adjusted so that the helicopter rotates in an uncontrolled manner about its yaw axis.

More specifically, unanticipated yaw is a flight characteristic of a helicopter that may occur in particular windy conditions or at low rotorcraft speed, for instance at take-off, landing or in hover condition, dependent usually on direction and strength of wind relative to the helicopter. This flight characteristic was first identified and analyzed in relation to OH-58 helicopters by the US Army and referred to as "loss of tail rotor effectiveness (LTE)" even though the tail rotor acting as anti-torque rotor always remained fully, serviceable. In fact, unanticipated yaw is not linked to any failure and has nothing to do with a full loss of tail rotor thrust.

However, in cases where unanticipated yaw is encountered, it occurs usually quickly and most often in the opposite direction of a given rotation direction of the main rotor (e. g. unanticipated yaw to the right if the main rotor rotates counterclockwise). Swift corrective action is needed for unanticipated yaw recovery as otherwise loss of control and possibly an accident may result.

In fact, the most probable reason for accidents following unanticipated yaw events appears to be a late and too limited corrective yaw input. In other words, the key feature of an unanticipated yaw recovery is a large amplitude corrective yaw input in the direction opposite to the unanticipated yaw direction. For instance, recovery of unanticipated yaw of a given helicopter to the right may be achieved by a large amplitude corrective left pedal input on the helicopter's left pedal of its rudder bar. However, recovery may not be immediate, but will only occur if the pilot persists in maintaining the large amplitude corrective yaw input.

As a result, unanticipated yaw events are very challenging flight characteristics of helicopters, and rotorcrafts in general, which usually require quick and adequate corrective measures taken by a pilot to achieve recovery in order to avoid an accident. However, the pilot must already be aware of and understand the risk of an unanticipated yaw event and have sufficient flight experience to prevent and recover from it.

Various documents in the prior art are related to unanticipated yaw awareness and unanticipated yaw recovery. For instance, the document EP 3 144 637 B1 describes a rotorcraft having a tail rotor and a system for alerting a pilot of the rotorcraft to a potential unanticipated yaw. Respective information about the potential unanticipated yaw is displayed on a cockpit display of the rotorcraft. The document EP 4 029 778 A1, in turn, describes a rotorcraft with a flight control system having an indicator that may notify a pilot of the rotorcraft when a pilot command may result in unanticipated yaw. Furthermore, the flight control system may be configured for controlling the rotorcraft's yaw rate in flight condition such that it remains below a selected yaw rate limit.

Other rotorcrafts with yaw control systems are described in the documents US 11 718 392 B2, US 8 718 841 B2, US 10 315 779 B2. Moreover, the document US 6 466 888 B1 describes a rotorcraft in which flight parameters can be processed to provide indications to a pilot and ground crew of dangerous flight conditions.

It is, therefore, an object of the present invention to provide a new rotorcraft that is configured to enable improved unanticipated yaw awareness and, more particularly, efficient and reliable unanticipated yaw prevention.

This object is solved by a rotorcraft comprising the features of claim 1. More specifically, the rotorcraft comprises a main rotor that is at least configured to provide lift in flight condition of the rotorcraft, an anti-torque rotor that is at least configured to provide counter-torque for yaw movement control in the flight condition, a yaw control member that is linked to the anti-torque rotor for commanding thrust generation of the anti-torque rotor, and an unanticipated yaw prevention system for preventing unanticipated yaw of the rotorcraft in the flight condition. The unanticipated yaw prevention system comprises a yaw control computer configured to determine a current yaw rate of the rotorcraft in the flight condition, alerting means configured to alert at least a pilot of the rotorcraft if the current yaw rate exceeds a predetermined yaw rate threshold, and corrective measure indicating means configured to indicate at least one corrective measure, in particular a pilot action on the yaw control member, adapted for preventing unanticipated yaw of the rotorcraft in the flight condition if the current yaw rate exceeds the predetermined threshold.

Advantageously, by providing the inventive rotorcraft with the unanticipated yaw prevention system which comprises the alerting means and the corrective measure indicating means, an efficient and reliable unanticipated yaw recovery is enabled. More particularly, by alerting via the alerting means at least the pilot of the rotorcraft if the current yaw rate exceeds a predetermined yaw rate threshold, the pilot is informed that the rotorcraft experiences an unanticipated yaw phenomenon. Thus, the pilot is aware that a quick and,adequate corrective measure needs to be taken for achieving recovery in order to avoid an accident. Furthermore, by indicating via the corrective measure indicating means at least one corrective measure, in particular a pilot action on the yaw control member, adapted for preventing unanticipated yaw of the rotorcraft in the flight condition if the current yaw rate exceeds the predetermined threshold, an adequate and reliable corrective measure is indicated to the pilot such that the pilot may take this action quickly for achieving recovery in order to avoid an accident.

Preferably, the at least one corrective measure adapted for preventing the unanticipated yaw of the rotorcraft in the flight condition is indicated to the pilot until recovery is accomplished. Thus, there is no need for the pilot to search for (alternative) adequate corrective measures or to be worried about a lack of efficiency of the at least one corrective measure, which could potentially lead to a misinterpretation of the unanticipated yaw event as a full loss of tail rotor effectiveness. In particular, respective reaction times of pilots for initiating recovery from unanticipated yaw may be reduced significantly and even unexperienced pilots may advantageously be guided upon occurrence of an unanticipated yaw event via the unanticipated yaw prevention system in the inventive rotorcraft for preserving the rotorcraft from an accident.

In some embodiments, alerting via the alerting means at least the pilot of the rotorcraft if the current yaw rate exceeds a predetermined yaw rate threshold and indicating via the corrective measure indicating means at least one corrective measure, in particular a pilot action on the yaw control member, adapted for preventing unanticipated yaw of the rotorcraft in the flight condition may be time-shifted. For instance, the at least one corrective measure may only be indicated by the corrective measure indicating means if the pilot does not act on the yaw control member as required for recovery from unanticipated yaw for a predetermined lapse of time after having been alerted via the alerting means.

As a result, accidents due to unanticipated yaw events may advantageously at least be reduced significantly. Thus, an improved safety and protection of the pilot, crew members and/or passengers of a given rotorcraft, as well as of the given rotorcraft itself, may be achieved.

According to some aspects, the predetermined yaw rate threshold amounts to 60 °/s.

Preferably, the yaw control member comprises a rudder control, wherein the corrective measure indicating means is configured to indicate a request for applying yaw control to the left or the right.

According to some aspects, the rotorcraft further comprises a collective pitch control member that is linked to the main rotor for commanding collective pitch of the main rotor, wherein the corrective measure indicating means is configured to indicate a request for acting on the collective pitch control member.

Preferably, the yaw control computer is configured to determine a current height above ground of the rotorcraft in the flight condition, wherein the corrective measure indicating means is configured to indicate the request for acting on the collective pitch control member if the current height above ground exceeds a predetermined height threshold.

Preferably, the corrective measure indicating means is configured to indicate the at least one corrective measure using at least one of a visual, auditive, or haptic representation.

Furthermore, the unanticipated yaw prevention system may comprise a database, wherein the yaw control computer is configured to retrieve from the database a predetermined relationship relating predefined positions of the yaw control member to rotorcraft headings and wind directions with respect to associated flight parameters, and to determine, based on current flight parameters, an applicable yaw control member graph using the predetermined relationship.

For instance, the current flight parameters may comprise one or more of rotorcraft mass, height over ground, outside temperature, air pressure, main rotor collective pitch, wind strength, or wind direction.

If desired, the yaw control computer may be configured to determine from the applicable yaw control member graph stable and unstable yaw zones.

The yaw control computer may further be configured to determine a current position of the yaw control member and current rotorcraft heading and wind directions, and the alerting means may be configured to alert at least a pilot of the rotorcraft if the current rotorcraft heading and wind directions are associated with an unstable yaw zone.

If desired, the alerting means may be configured to alert at least a pilot of the rotorcraft if the current position of the yaw control member is above a maximum value or below a minimal value of the applicable yaw control member graph.

Moreover, the yaw control computer may be configured to determine, based on the current flight parameters, wind limitations of the rotorcraft, and the alerting means may be configured to alert at least a pilot of the rotorcraft if predefined wind limitations are exceeded.

According to some aspects, the unanticipated yaw prevention system comprises an actuator that is activatable by a pilot of the rotorcraft to instruct the yaw control computer to perform the at least one corrective measure automatically.

The actuator may be a pushbutton.

Furthermore, the above-described object is solved by a rotorcraft comprising the features of claim 7. More specifically, the rotorcraft comprises a main rotor that is at least configured to provide lift in flight condition of the rotorcraft, an anti-torque rotor that is at least configured to provide counter-torque for yaw movement control in the flight condition, a yaw control member that is linked to the anti-torque rotor for commanding thrust generation of the anti-torque rotor, a sensor system comprising a plurality of sensors which are configured to provide current flight parameter data, and an unanticipated yaw prevention system for preventing unanticipated yaw of the rotorcraft in the flight condition. The unanticipated yaw prevention system comprises a database, a yaw control computer and alerting means. The database hosts a predetermined relationship relating predefined positions of the yaw control member to reduced power or collective pitch used by the rotorcraft with respect to associated flight parameters. The yaw control computer is configured for determining a current control setting of the yaw control member, determining a current reduced power or collective pitch used by the rotorcraft, determining current flight parameters based on the current flight parameter data provided by the sensor system, retrieving the predetermined relationship from the database, and determining, based on the current reduced power or collective pitch used by the rotorcraft and the current flight parameters, an applicable yaw control member graph using the predetermined relationship. The alerting means are configured for alerting at least a pilot of the rotorcraft about an unanticipated yaw risk if the current control setting of the yaw control member is above a maximum value or below a minimal value of the applicable yaw control member graph.

Advantageously, by providing the inventive rotorcraft with the unanticipated yaw prevention system which comprises the alerting means, an improved unanticipated yaw awareness of the pilot is achieved. More particularly, by alerting via the alerting means at least the pilot of the rotorcraft about an unanticipated yaw risk if the deviation of the current control setting of the yaw control member from the expected control setting of the yaw control member exceeds a predetermined deviation threshold, the pilot is informed that unanticipated yaw may be imminent if no adequate corrective measure is taken. Thus, the pilot may take an appropriate action prior to occurrence of an unanticipated yaw event.

According to some aspects, the current flight parameters comprise one or more of rotorcraft mass, height over ground, outside temperature, air pressure, main rotor speed, main rotor torque or main rotor collective pitch.

The current flight parameters may further comprise one or more of wind strength or wind direction.

The yaw control computer may further be configured to determine from the applicable yaw control member graph stable and unstable yaw zones.

The yaw control computer may further be configured to determine current rotorcraft heading and wind directions, wherein the alerting means is configured to alert at least a pilot of the rotorcraft if the current rotorcraft heading and wind directions are associated with an unstable yaw zone.

The yaw control computer may further be configured to determine, based on the current flight parameters, wind limitations of the rotorcraft, wherein the alerting means is configured to alert at least a pilot of the rotorcraft if predefined wind limitations are exceeded.

According to some aspects, the yaw control computer is configured for determining, based on the current flight parameters, whether the rotorcraft is in the hover condition, and, if the rotorcraft is in the hover condition, retrieving a predetermined relationship relating reduced power or collective pitch used by the rotorcraft without wind in hover condition of the rotorcraft to associated control settings of the yaw control member from the database for determining the applicable yaw control member graph.

According to some aspects, the maximum and minimal values are defined by a 20 % margin around a control setting of the yaw control member in hover condition determined by the yaw control computer.

Preferably, the current flight parameter data comprises at least one of speed over ground data or Global Navigation Satellite System data.

According to some aspects, the yaw control member comprises a rudder bar with a left pedal and a right pedal, wherein the current control setting of the yaw control member is a current pedal position of the left and right pedals determined by the yaw control computer using pedal position data provided by the sensor system.

According to some aspects, the sensor system comprises at least a temperature sensor for determining current outside air temperature data, an air pressure sensor for determining current outside air pressure data, and a rotor torque measurement sensor for determining current rotor torque data of the main rotor.

Preferably, the yaw control computer uses the current outside air temperature data, the current outside air pressure data, current rotor speed data of the main rotor, and the current rotor torque data of the main rotor for determining the current reduced power used by the rotorcraft.

According to some aspects, the unanticipated yaw prevention system comprises an actuator that is activatable by a pilot of the rotorcraft to instruct the yaw control computer to perform at least one corrective measure automatically.

Preferably, the actuator is a pushbutton.

Embodiments are outlined by way of example in the following description with reference to the attached drawings. In these attached drawings, identical or identically functioning components or elements are labeled with identical reference numbers and characters and are, consequently, only described once in the following description.
- Figure 1 is a diagram of an illustrative rotorcraft with an unanticipated yaw prevention system according to the present invention,
- Figure 2 is a diagram showing an illustrative implementation of the unanticipated yaw prevention system of Figure 1 with a sensor system, an actuator, and a database,
- Figure 3 is a diagram showing an illustrative implementation of the sensor system of Figure 2,
- Figure 4 is a diagram showing an illustrative implementation of the actuator of Figure 2,
- Figure 5 is a diagram showing an illustrative implementation of the database of Figure 2,
- Figure 6 is a diagram of a graphical representation of an illustrative pedal position over rotorcraft heading with respect to wind in flight condition of the rotorcraft of Figure 1 ,
- Figure 7 is a diagram of a graphical representation of pedal position in hover condition of the rotorcraft without wind with respect to reduced power used by the rotorcraft of Figure 1,
- Figure 8 is a diagram of graphical representations of illustrative pedal positions over rotorcraft heading with respect to wind in flight condition of the rotorcraft of Figure 1, and
- Figure 9 is a diagram illustrating wind limitations and associated wind limitation alerts for the rotorcraft of Figure 1.

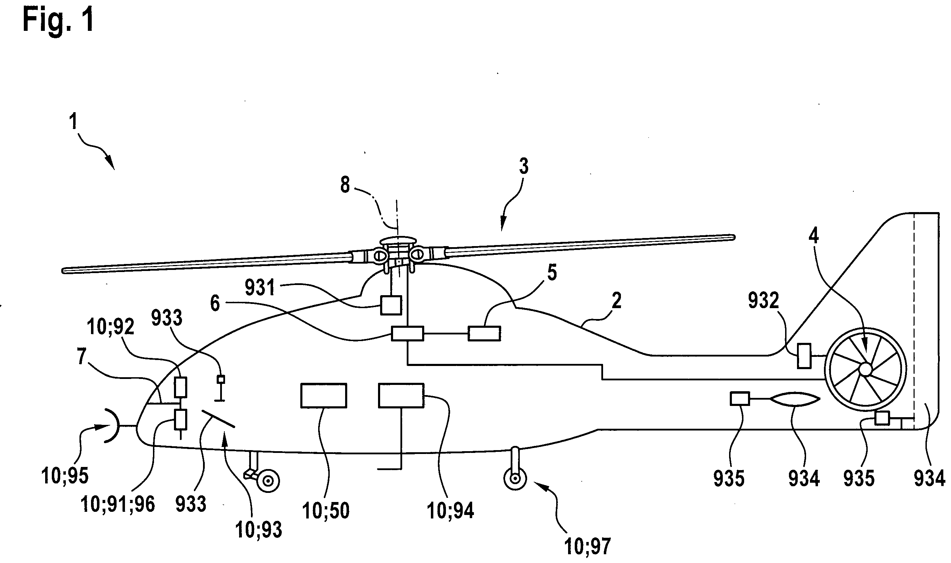

Figure 1 shows an illustrative rotorcraft 1 with a fuselage 2 extending longitudinally from a nose to a rear end of the rotorcraft 1, and with a main rotor 3 which is, by way of example, embodied as a multi-blade rotor. The main rotor 3 is at least configured to provide lift in flight condition of the rotorcraft 1 and illustratively rotates about an associated main rotor axis 8. In the following description it is assumed, by way of example, that the main rotor 3 rotates in counterclockwise direction about the associated main rotor axis 8.

Furthermore, the rotorcraft 1 comprises an anti-torque rotor 4 that is at least configured to provide counter-torque for yaw movement control in the flight condition of the rotorcraft 1. The anti-torque rotor 4 is illustratively arranged at the tail of the rotorcraft 1 and may also be referred to as tail rotor or anti-torque tail rotor, given its position at the rear end of the rotorcraft 1.

Illustratively, the main rotor 3 and the anti-torque rotor 4 are driven in rotation by a power plant. For example, the power plant comprises at least one engine 5. The engine 5 may be connected to at least one of the main rotor 3 and the anti-torque rotor 4 via a main power transmission gearbox 6.

By way of example, the rotorcraft 1 is embodied as a helicopter. Thus, for purposes of simplicity and clarity, the rotorcraft 1 is hereinafter referred to as the "helicopter 1".

Moreover, the helicopter 1 comprises a predetermined number of systems 10 for enabling it to operate. More particularly, the helicopter 1 is preferably equipped with a flight control system 93. This flight control system 93 may include actuatable devices 931, 932 suitable for modifying the pitch of the blades of the main rotor 3 and/or the anti-torque rotor 4. By way of example, the actuatable devices 931, 932 comprise servo-controls connected to controls 933.

In addition, the helicopter 1 may include actuatable devices 934 of a first type, in particular the moving airfoil surface type, such as a stabilizer and/or a tail fin, for example. In this case, the flight control system 93 is preferably provided with actuatable devices 935 of a second type for controlling the actuatable devices 934 of the first type.

The helicopter 1 may further comprise an autopilot system 94 connected to the flight control system 93. By way of example, such an autopilot system 94 may comprise a computer applying piloting relationships in order to control actuators connected to the flight control system 93.

Furthermore, the helicopter 1 may comprise an information system 91 for displaying information on a control panel 7 and/or on a head-up display system 92. By way of example, the information system 91 comprises a panel for informing a pilot of failures.

The helicopter 1 may also comprise a navigation system 95 having the function of directing the helicopter 1, e. g. by providing the path that has been followed by the helicopter 1, a path that is to be followed by the helicopter 1, the altitude of the helicopter 1, and so on. Such a navigation system 95 may comprise multiple pieces of equipment, and by way of example it may include a radar.

Moreover, the helicopter 1 may comprise a radio communication system 96, e. g. a radio. Furthermore, a landing gear system 97 may be provided and e. g. carried by the fuselage 2 of the helicopter 1.

At this point, it should be noted that the above-described systems 91-97 may also include members in common. For example, a multifunction screen known as a multifunction "display" may serve to display information relating to a plurality of the systems 91-97 and may control members of a plurality of the systems 91-97 of the helicopter 1.

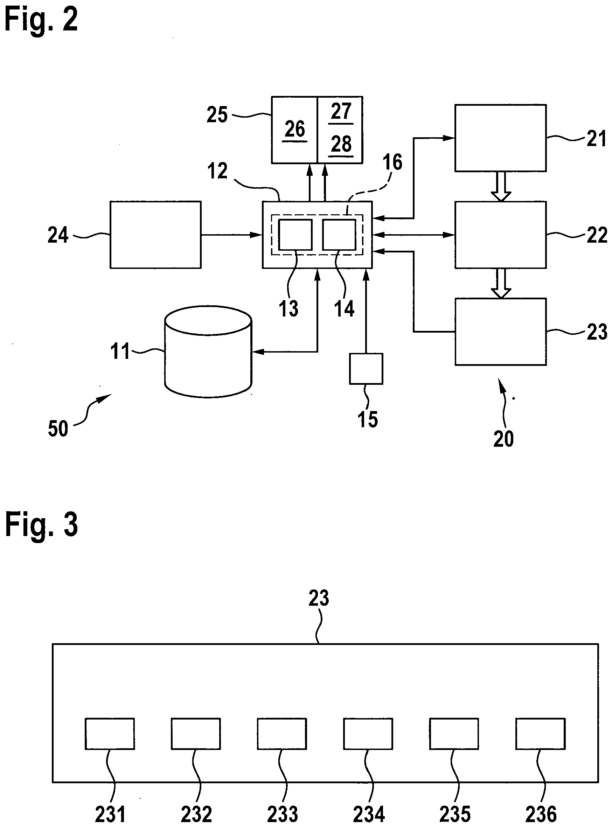

According to the present invention the helicopter 1 comprises an unanticipated yaw prevention system 50 for preventing unanticipated yaw of the helicopter 1 in the flight condition. The unanticipated yaw prevention system 50 is described in detail below at Figure 2.

Figure 2 shows the unanticipated yaw prevention system 50 of Figure 1 in an illustrative realization. The unanticipated yaw prevention system 50 comprises a yaw control computer 12 which may e. g. be implemented by an onboard computer of the helicopter 1 of Figure 1. Such an onboard computer may, for instance, be integrated into, or provided by, the autopilot system 94 of Figure 1.

Illustratively, the yaw control computer 12 comprises a processor unit 16. The function of the processor unit 16 is to perform method steps required for unanticipated yaw prevention according to the present invention. For this purpose, the processor unit 16 may be of conventional type.

By way of example, the processor unit 16 comprises calculation means 13 of the processor or microprocessor type. The processor unit 16 may further comprise non-volatile memory 14 storing executable programming code that can be executed by the calculation means 13. The processor unit 16 may also comprise volatile memory for storing temporary data used e. g. in the method steps required for unanticipated yaw prevention according to the present invention.

Moreover, the yaw control computer 12 may be connected to the database 11 of Figure 1 in order to store information and/or to retrieve and make use of information stored in the database 11. The database may comprise at least one file. The term "database" may refer to a single database, or to a set of databases.

Furthermore, the yaw control computer 12 may be connected to one or more members 20 of one or more of the systems 10 of Figure 1. Thus, the yaw control computer 12 may generate output signals for controlling each one of the members 20 that is connected to the yaw control computer 12. Moreover, the yaw control computer 12 may receive input signals coming from one or more of the members 20, which may convey data of all kinds and instructions of all kinds.

Illustratively, the yaw control computer 12 is connected to a plurality of members 20 which are described in detail hereinafter. However, reference is made to the pertinent literature for obtaining more detailed information about the various members described below.

The plurality of members 20 comprises one or more actuatable devices 22 capable of changing state on request, and one or more actuators 21 which is/are connected to the one or more actuatable devices 22 in order to control the state of the one or more actuatable devices 22. For instance, the one or more actuators 21 may comprise one or more of the actuators 933 of the flight control system 93 of Figure 1 and the one or more actuatable devices 22 may comprise a blade of the anti-torque rotor 4 of Figure 1 or indeed a movable airfoil surface, it being generally possible for an actuator to be a servo-control giving rise to movement of an actuatable device. The one or more actuatable devices 22 may e. g. also comprise a valve, a fuel meter, a windscreen wiper, a retractable landing gear, a search light, a camera, an extinguisher, a winch, etc.

Furthermore, the plurality of members 20 preferably comprises a sensor system 23 for measuring required flight parameters. Any sensor of the sensor system 23 may be a sensor as such, or more generally it may be a measurement system. By way of example, a sensor may be in the form of an air data system, an icing sensor, a temperature sensor, a range sensor, a speed or torque measurement system, a fuel gauge, a system for measuring electrical current or voltage, a system for determining the position of a moving portion, and so on. An illustrative implementation of the sensor system 23 is described below at Figure 3.

Furthermore, the plurality of members 20 may comprise information interfaces 25 providing information to at least one person, e. g. a pilot of the helicopter 1 of Figure 1. An information interface may comprise a device for displaying a variety of information and/or for issuing visible or audible signals, or indeed a haptic system. For instance, the term "information interfaces" may cover status information means 26 displaying e. g. the status of one or more of the plurality of members 20, as well as alerting means 27 configured to alert e. g. at least a pilot of the helicopter 1 of Figure 1 in predetermined flight situations, and/or corrective measure indicating means 28 configured to indicate at least one corrective measure, in particular a pilot action, in predetermined flight situations. More particularly, the corrective measure indicating means 28 may be configured to indicate the at least one corrective measure using at least one of a visual, auditive, or haptic representation.

Moreover, the plurality of members 20 may comprise control interfaces 24 generating at least one order for one or more other members of the plurality of members 20. An illustrative control interface of the control interfaces 24 may comprise a collective pitch lever, a cyclic stick, a button that can be operated manually, a voice control system, a mouse type pointer or equivalent means, a keyboard, and so on.

Furthermore, the yaw control computer 12 may be connected to a particular actuator 15 which may e. g. be implemented by means of a pushbutton. The actuator 15 is preferably activatable by a pilot of the helicopter 1 of Figure 1 to instruct the yaw control computer 12 to perform at least one corrective measure for unanticipated yaw recovery automatically. Thus, the actuator 15, i. e. a respective pushbutton, may be understood as a "panic" button which is activatable if the pilot of the helicopter 1 of Figure 1 is not able to manage an unanticipated yaw event by himself.

Figure 3 shows the sensor system 23 of Figure 2 in an illustrative realization. By way of example, the sensor system 23 comprises a plurality of sensors which are configured to provide current flight parameter data. Illustratively, the plurality of sensors includes a temperature sensor 231, an air pressure sensor 232, a yaw control member position detection system 233, a rotor speed measurement sensor 234, an air and wind data system 235, and a rotor torque measurement sensor 236. Other sensors, such as e. g. an icing sensor, a range sensor, a fuel gauge and so on may likewise be provided in the sensor system 23.

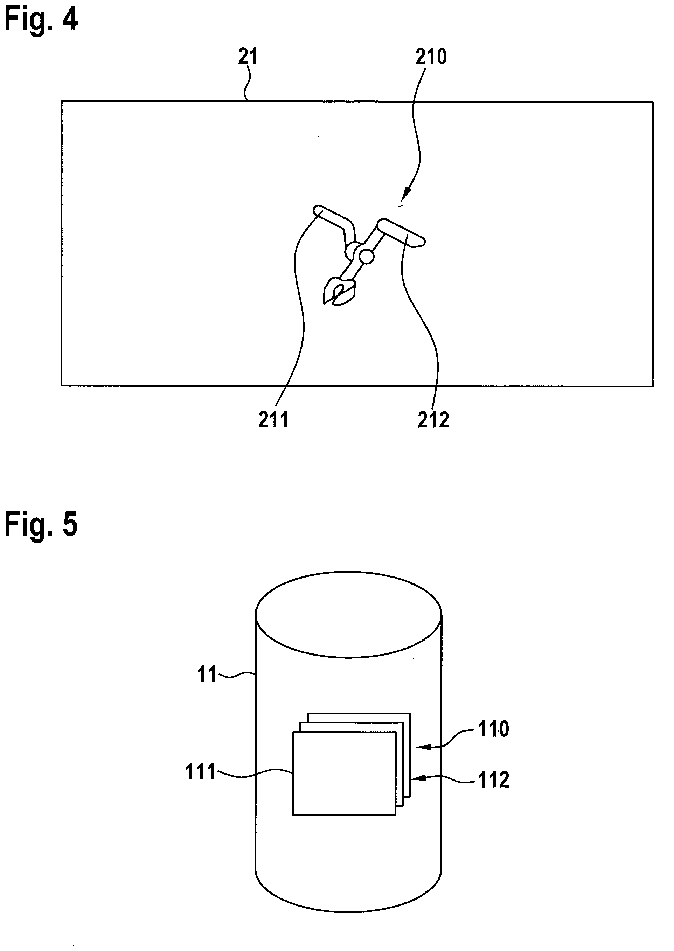

Figure 4 shows an actuator 210 illustrating one of the one or more actuators 21 of Figure 2. By way of example, the actuator 210 is a yaw control member that is linked to the anti-torque rotor 4 of Figure 1 for commanding thrust generation of the anti-torque rotor 4.

Preferably, the yaw control member 210 comprises a rudder control 211, 212, such as a rudder bar. Illustratively, the rudder control 211, 212 comprises a left pedal 211 for applying yaw control to the left, and a right pedal 212 for applying yaw control to the right.

At this point, it should be noted that in the example of the helicopter 1 of Figure 1 with the main rotor 3 that is, by way of example, assumed to rotate in counterclockwise direction about the associated main rotor axis 8 of Figure 1, applying yaw control to the left would refer to creating a counter-torque force that implies a rotation of the fuselage 2 of Figure 1 about the associated main rotor axis 8 in counterclockwise direction. To the contrary, applying yaw control to the right would refer to creating a counter-torque force that implies a rotation of the fuselage 2 of Figure 1 about the associated main rotor axis 8 in clockwise direction.

Figure 5 shows the database 11 of Figure 2 in an illustrative realization. The database 11 is provided to store information and/or to enable retrieval of information stored therein.

The database 11 comprises preferably at least one and, illustratively, a plurality of data files 110. The data files 110 may e. g. comprise a predetermined relationship 111 related to yaw movement control in windy condition and/or graphical representations 112 related to prevention of unanticipated yaw.

As described above, prevention of unanticipated yaw may be achieved in the helicopter 1 of Figure 1 using the unanticipated yaw prevention system 50 of Figure 1 and Figure 2 having the components described in Figure 2 to Figure 5, as described in detail hereinafter by referring at the same time to Figure 1 to Figure 5:
More specifically, according to an aspect of the present invention operation of the unanticipated yaw prevention system 50 for preventing unanticipated yaw of the helicopter 1 in the flight condition comprises determination of a current yaw rate of the helicopter 1 in the flight condition by means of the yaw control computer 12. If the current yaw rate exceeds a predetermined yaw rate threshold, the alerting means 27 alerts at least a pilot of the helicopter 1 and the corrective measure indicating means 28 indicates at least one corrective measure, in particular a pilot action on the yaw control member 210, adapted for preventing unanticipated yaw of the helicopter 1 in the flight condition. By way of example, the predetermined yaw rate threshold amounts to 60 °/s.

This operation of the unanticipated yaw prevention system 50 for preventing unanticipated yaw of the helicopter 1 in the flight condition is specifically advantageous if the helicopter 1 is a small or medium-size helicopter and, in particular, if the helicopter 1 is implemented without the autopilot system 94 of Figure 1. In this case, the indication of a required pilot action adapted for preventing unanticipated yaw of the helicopter 1 in the flight condition enables the pilot to perform the required pilot action quickly and with reduced reaction time, thus, at least reducing the risk of a catastrophic event.

By way of example, if the yaw control member 210 comprises a rudder control, the corrective measure indicating means 28 may indicate a request for applying yaw control to the left or the right. If the rudder control comprises e. g. a rudder bar with the left pedal 211 and the right pedal 212, the request for applying yaw control to the left may be a request for acting on the left pedal 211, whereas the request for applying yaw control to the right may be a request for acting on the right pedal 212. In these cases, a respective indication may also be provided by a haptic feedback on the left or right pedals 211, 212.

Alternatively, or in addition, the corrective measure indicating means 28 may indicate a request for acting on the collective pitch control member 933 that is linked to the main rotor 3 for commanding collective pitch of the main rotor 3. In this case, the yaw control computer 12 may determine a current height above ground of the helicopter 1 in the flight condition and the corrective measure indicating means 28 may indicate the request for acting on the collective pitch control member 933 only if the current height above ground exceeds a predetermined height threshold. By way of example, the predetermined height threshold may be equal to 300 ft.

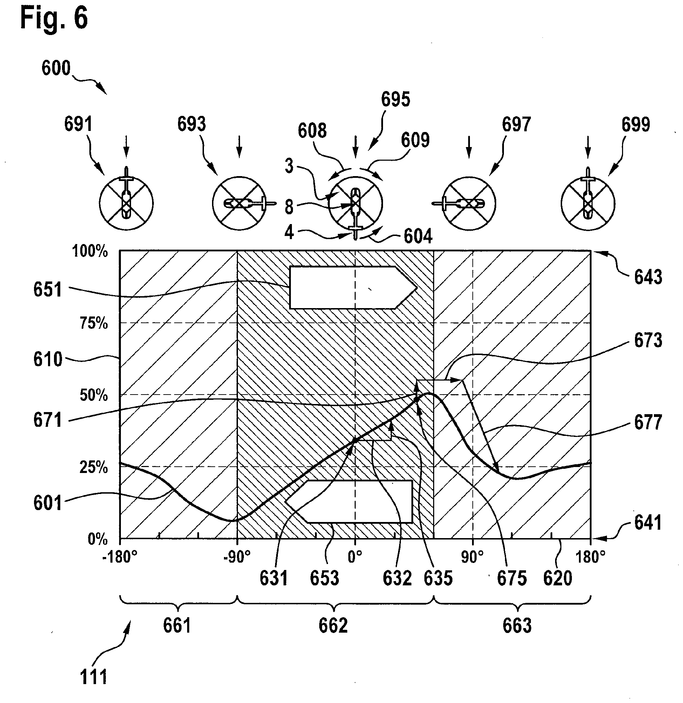

Turning now to Figure 6 which shows a diagram 600 that illustrates a graphical representation 601 of yaw control member position over helicopter heading with respect to wind. The graphical representation 601 is a graph that illustrates graphically the predetermined relationship 111 of Figure 5 which is related to yaw movement control in windy condition.

As such, the predetermined relationship 111 relates predefined positions of the yaw control member to helicopter headings and wind directions with respect to associated flight parameters which comprise one or more of rotorcraft mass, height over ground, outside temperature, main rotor collective pitch, wind strength, or wind direction. The graph 601 is derived from the predetermined relationship 111 for specific values of the associated flight parameters and is, therefore, exchangeable dependent on these parameters. The predetermined relationship 111 and the graph 601 may e. g. be determined during test flights with different helicopters, i. e. types of helicopters in different flight conditions.

More specifically, the graph 601 illustrates yaw control member input values 610 which are required to obtain associated helicopter headings 620 with respect to wind. The yaw control member input values 610 are given as percentages of applied yaw control with a yaw control 641 of 0 % representing application of yaw control fully to the left, and a yaw control 643 of 100 % representing application of yaw control fully to the right. The associated helicopter headings 620 with respect to wind range from -180° to 180°, wherein -180° corresponds to a heading with tailwind, -90° to a heading with crosswind from the right side, 0° to a heading with headwind, 90° to a heading with crosswind from the left side, and 180° again to a heading with tailwind. Furthermore, right yaw is illustrated with an arrow 651 and left yaw is illustrated with an arrow 653.

Moreover, the associated helicopter headings 620 with respect to wind are further illustrated by means of pictograms of a helicopter having a given heading with respect to a predetermined wind direction. More particularly, a pictogram 691 shows the helicopter with tailwind, a pictogram 693 shows the helicopter with crosswind from the right side, a pictogram 695 shows the helicopter with headwind, a pictogram 697 shows the helicopter with crosswind from the left side, and a pictogram 699 shows the helicopter again with tailwind.

As illustrated by way of example with respect to the pictogram 695, the helicopter corresponds by way of example to the helicopter 1 of Figure 1 that comprises the main rotor 3 which rotates about the main rotor axis 8, as well as the anti-torque rotor 4. Accordingly, as described above, it is assumed that the main rotor 3 rotates in counterclockwise direction 608 about the associated main rotor axis 8, which results in fuselage torque in a direction 609. Thus, the anti-torque rotor 4 must generate counter torque in a counter torque direction 604 that counters the fuselage torque in the direction 609 according to the pictogram 695 in order to keep the helicopter frontally against the headwind steady on its yaw axis.

By way of example, a yaw control of approximately 33 % is required to achieve a stable flight condition of the helicopter with headwind. This may be derived from a point 631 on the graph 601 which represents the necessary yaw control input required for keeping the helicopter steady and stable on its yaw axis related to, the angle between the helicopter's longitudinal axis and the wind direction.

Furthermore, the graph 601 may be divided into a stable zone 662 and two unstable zones 661, 663. The stable zone 662 defines a region of the graph 601, where the helicopter recovers a stable state after a perturbation without pilot action such that occurrence of unanticipated yaw may be excluded. The two unstable zones 661, 663 which form, in fact, a single zone as both zones 661, 663 join each other, are regions of the graph 601 where unanticipated yaw may occur.

For purposes of explanation, a first flight situation is illustrated starting from the point 631 and assuming that the incoming wind changes from headwind to crosswind from the left of the helicopter while the yaw control of approximately 33 % is maintained, as indicated with a line 632. In this case, the helicopter would start to rotate in clockwise direction due to a lack of sufficient yaw control to the right and change its heading in clockwise direction. In order to avoid such a change of heading, a corrective yaw control to the right must be applied, as indicated with an arrow 635, to retrieve the graph 601 and to reposition the helicopter adequately on its yaw axis, thus, cancelling the change of heading.

A second flight situation is illustrated starting from a point 675 and assuming that an unrequired yaw control to the right is applied, as indicated with an arrow 671. In this case, the helicopter would start to rotate in clockwise direction as too much yaw control to the right is applied, which would lead to unanticipated yaw, as illustrated with an arrow 673, which shows that the graph 601 is quitted. In order to recover from the unanticipated yaw, a significant corrective yaw control to the left must be applied, as indicated with an arrow 677 for bringing the helicopter back into a stable flight position.

Referring now back to the operation of the unanticipated yaw prevention system 50 for preventing unanticipated yaw of the helicopter 1 in the flight condition as described above by referring at the same time to Figure 1 to Figure 5, which may advantageously make use of the graph 601 of Figure 6, as described hereinafter. More specifically, in the operation of the unanticipated yaw prevention system 50 for preventing unanticipated yaw of the helicopter 1 in the flight condition, the yaw control computer 12 may retrieve from the database 11 the predetermined relationship 111 relating predefined positions of the yaw control member 210 to the rotorcraft headings and wind directions 691, 693, 695, 697, 699 with respect to associated flight parameters. Then, the yaw control computer 12 may use the predetermined relationship 111 to determine, based on current flight parameters, an applicable yaw control member graph, e. g. the graph 601.

More particularly, the yaw control computer 12 may e. g. use data provided by the sensor system 23 to determine the current flight parameters of the helicopter 1. For instance, the yaw control computer 12 may use the temperature sensor 231 to determine the current outside temperature, the air and wind data system 235 to determine wind strength and/or wind direction, and so on. Then, the yaw control computer 12 may retrieve from the database 11 an applicable yaw control member graph which is linked to the current flight parameters, e. g. in the present example the graph 601. Subsequently, the yaw control computer 12 may determine from the graph 601 stable and unstable yaw zones, e. g. the stable and unstable yaw zones 661, 662, 663. Moreover, the yaw control computer 12 may be configured to determine a current position of the yaw control member 210, e. g. from data provided by the yaw control member position detection system 233, as well as the current helicopter heading and wind directions 691, 693, 695, 697, 699.

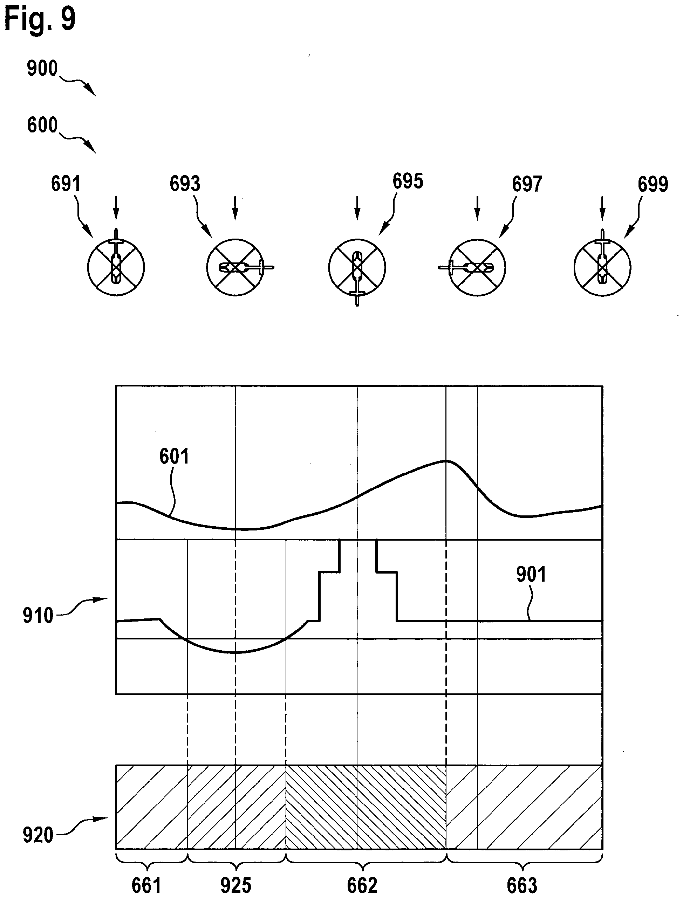

Based on the performed determinations, the alerting means 27 may alert at least the pilot of the helicopter 1 if the current helicopter heading and wind directions 691, 693, 695, 697, 699 are associated with an unstable yaw zone 661, 663. Alternatively, or in addition, the alerting means 27 may alert at least the pilot of the helicopter 1 if the current position of the yaw control member 210 is above a maximum value or below a minimal value of the graph 601. Still alternatively, or in addition, the alerting means 27 may alert at least the pilot of the helicopter 1 if predefined wind limitations are exceeded, as described below at Figure 9.

At this point, it should be noted that the operation of the unanticipated yaw prevention system 50 for preventing unanticipated yaw of the helicopter 1 in the flight condition is described above by referring at the same time to Figure 1 to Figure 5 (with or without Figure 6) with respect to flight situations in which corrective measures must be taken assuming that an unanticipated yaw event is already detected. However, the unanticipated yaw prevention system 50 may also be used to detect a risk of unanticipated yaw in hover condition or at low flight speed such that the pilot of the helicopter 1 may be alerted in advance to enable improved unanticipated yaw awareness. In this case, the unanticipated yaw prevention system 50 would only make use of the alerting means 27 and a predetermined relationship that relates reduced power used by the helicopter 1 without wind in hover condition or at low flight speed of the helicopter 1 to associated control settings of the yaw control member, as described hereinafter. At this point, it should be noted that any reference to the term "hover condition" in the present application should be understood as a reference to hovering as such, but also as a reference to a flight at low flight speed, such as a speed over ground of e. g. at most 10 kts.

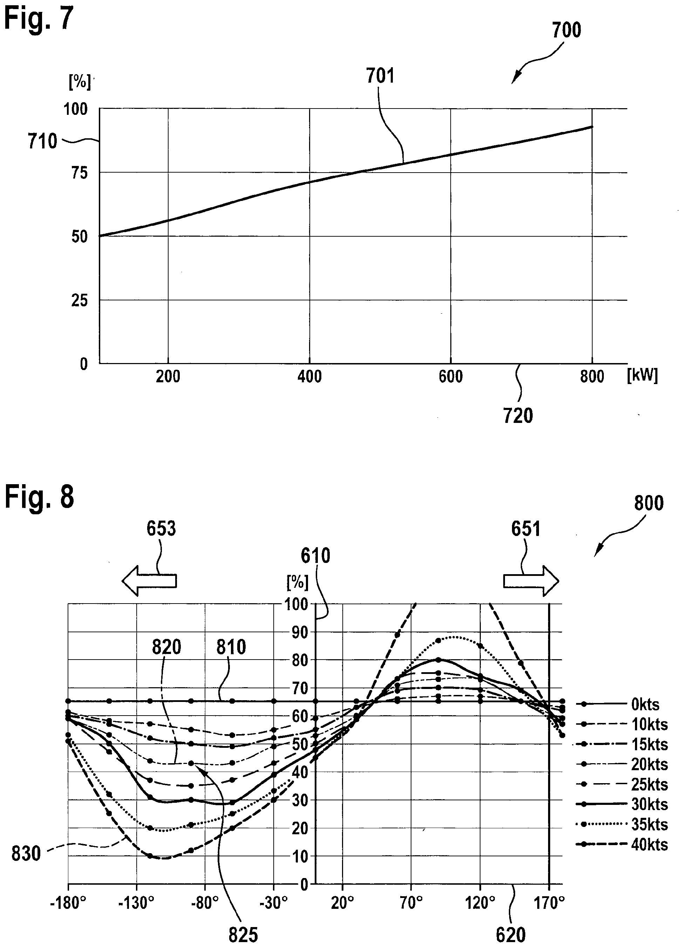

Figure 7 shows a diagram 700 which illustrates required control settings 710 of a yaw control member over associated reduced power values 720 of reduced power used by a helicopter. The required control settings 710 are given as percentages similar to the diagram 600 of Figure 6, whereas the reduced power values 720 are given in kilowatt.

By way of example, a graph 701 is shown for the helicopter 1 of Figure 1, which links yaw control member positions of the yaw control member 210 of Figure 2 in hover condition of the helicopter 1 without wind to reduced power used by the helicopter 1 with respect to associated flight parameters which comprise one or more of rotorcraft mass, height over ground, outside temperature, or main rotor collective pitch. As can be seen from the diagram 700, the graph 701 is almost linear, i. e. any increase of the reduced power in the illustrated range requires a proportional linear increase of yaw control input for the helicopter to remain steady and stable in hover condition.

Figure 8 shows a diagram 800 that is similar to the diagram 600 of Figure 6 in that it illustrates yaw control member input values 610 which are required to obtain associated helicopter headings 620 with respect to wind, associated with current flight parameters which comprise one or more of rotorcraft mass, height over ground, outside temperature, main rotor collective pitch, wind strength, or wind direction. Furthermore, right yaw 651 and left yaw 653 directions are indicated.

Illustratively, the diagram 800 shows several graphs for the helicopter 1 of Figure 1, which represent yaw control member positions of the yaw control member 210 of Figure 2 over helicopter headings of the helicopter 1 with respect to wind. Starting from the diagram 700 of Figure 7, the graphs are e. g. determined for a reduced power of approximately 400 kW. Alternatively, they may be determined for a given collective pitch of the helicopter's main rotor 3 of Figure 1. In other words, the diagram 800 is illustratively linked to a given reduced power or collective pitch used by the helicopter 1 and other diagrams which are similar to the diagram 800 may be provided for other reduced power or collective pitch values.

For purposes of illustration, only three graphs are separately labelled with the reference signs 810, 820, 830. By way of example, the graph 810 is associated with a wind speed of 0 kts and is derived from the graph 701 of Figure 7, the graph 820 is associated with a wind speed of 20 kts, and the graph 830 is associated with a wind speed of 40 kts. Moreover, a point 825 is labelled on the graph 820.

More specifically, the graph 810 indicates that the helicopter 1 of Figure 1 is stable in hover condition with any possible heading and without wind, i. e. a wind speed of 0 kts, at a yaw control member input of 65 %. Assuming now, by way of example, that the helicopter 1 of Figure 1 is stable in hover condition with a heading of -90°, but with a yaw control member input of approximately 40 %, as may be derived from the point 825. Thus, it may be derived from the graph 820 that the helicopter 1 is hovering at a wind speed of 20 kts.

As described above, the unanticipated yaw prevention system 50 of Figure 1 and Figure 2 having the components described in Figure 2 to Figure 5 may be used in the helicopter 1 of Figure 1 for detecting a risk of unanticipated yaw in hover condition of the helicopter 1 of Figure 1 to enable improved unanticipated yaw awareness, as described in detail hereinafter by referring at the same time to Figure 1 to Figure 5, Figure 7, and Figure 8:
More specifically, according to an aspect of the present invention operation of the unanticipated yaw prevention system 50 for preventing unanticipated yaw of the helicopter 1 in the flight condition comprises determining, by means of the yaw control computer 12 and based on current flight parameter data provided by the sensor system 23, whether the helicopter 1 is in hover condition. If so, the yaw control computer 12 performs the following steps: determining a current control setting of the yaw control member 210; determining a current reduced power used by the helicopter 1, retrieving a predetermined relationship, i. e. the graph 701, relating reduced power used by the helicopter 1 without wind in hover condition of the helicopter 1 to associated control settings of the yaw control member 210; determining an expected control setting of the yaw control member 210 that is associated with the current reduced power used by the helicopter 1 from the graph 701; and determining a deviation of the current control setting of the yaw control member 210 from the expected control setting of the yaw control member 210. If the deviation of the current control setting of the yaw control member 210 from the expected control setting of the yaw control member 210 exceeds a predetermined deviation threshold, the alerting means 27 alerts at least a pilot of the helicopter 1 about an unanticipated yaw risk. Preferably, the predetermined deviation threshold amounts to 20 %.

Determining whether the deviation exceeds the predetermined deviation threshold may be accomplished using the diagram 800 of Figure 8, which may, therefore, e. g. be retrieved by the yaw control computer 12 from the database 11. More specifically, the expected control setting of the yaw control member 210 should correspond to a position on the graph 810, whereas the current control setting corresponds e. g. to a position on another graph, for instance, the point 825 on graph 820. The graph 810 indicates a yaw control member input of 65 %, whereas the point 825 indicates a yaw control member input of approximately 40 %. Accordingly, in this example a deviation of 25 % is determined, which exceeds a predetermined deviation threshold of 20 %.

By way of example, the current flight parameter data comprises at least one of speed over ground data or Global Navigation Satellite System (GNSS) data. Such data may e. g. be obtained from an onboard GNSS module, which may be integrated into the information interfaces 25.

Furthermore, the current control setting of the yaw control member 210 may e. g. be a current pedal position of the left and right pedals 211, 212 determined by the yaw control computer 12 using pedal position data provided by the sensor system 23, if the yaw control member 210 comprises a rudder bar with the left pedal 211 and the right pedal 212. In particular, the pedal position data may be provided by the yaw control member position detection system 233.

Moreover, the current reduced power used by the helicopter 1 may be determined by means of the yaw control computer 12 using current outside air temperature data, current outside air pressure data, current rotor speed data of the main rotor 3, and current rotor torque data of the main rotor 3. By way of example, the current outside air temperature data may be determined by means of the temperature sensor 231, the current outside air pressure data may be determined by means of the air pressure sensor 232, the current rotor speed data of the main rotor 3 may be determined by means of the rotor speed measurement sensor 234, and the current rotor torque data of the main rotor 3 may be determined by means of the rotor torque measurement sensor 236.

At this point, it should be noted that the operation described hereabove is illustratively exclusively linked to the hover condition of the helicopter 1. However, the diagram 800 of Figure 8 may also be used in a more general manner as described hereinafter with reference to an alternative operation of the unanticipated yaw prevention system 50 for preventing unanticipated yaw of the helicopter 1 in the flight condition. However, for simplicity and conciseness this alternative operation is explained more briefly and it is assumed that in the flight condition of the helicopter 1 the main rotor collective pitch and/or the current reduced power used by the helicopter 1 were already determined and are, thus, known.

Using the known main rotor collective pitch and/or the current reduced power used by the helicopter 1, an appropriate applicable diagram representing yaw control member positions of the yaw control member 210 of Figure 2 over helicopter headings of the helicopter 1 with respect to wind may be determined and retrieved. In the alternative operation it is assumed that this is the diagram 800 of Figure 8.

Then, knowing a current wind strength, i. e. wind speed, which may e. g. be determined using the wind data system 235 of Figure 3, an applicable graph associated with the current wind strength may be determined from the diagram 800. Assuming that in the present example the current wind strength is 20 kts, the graph 820 may be determined.

Furthermore, knowing a current wind direction, which may also e. g. be determined using the wind data system 235 of Figure 3, an applicable control setting represented by an associated position on the graph 820 may be determined. At this point, it is assumed that respective wind directions and/or helicopter headings are e. g. derived from the diagram 600 of Figure 6 and included into the diagram 800 using e. g. the pictograms 691, 693, 695, 697, 699 shown in Figure 6. By way of example, it is now assumed that the current wind direction is linked to the point 825 on the graph 820.

As a result, in the alternative operation the present example described hereabove would not lead to an alert. In fact, in the alternative operation respective triggers for alerts are preferably associated minimum and maximum values of each graph and as the point 825 is on the graph 820 and neither below the minimum value nor above the maximum value of the graph 820, it may be assumed that there is no risk for unanticipated yaw.

It should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, the unanticipated yaw prevention system 50 is described above as being configured to indicate merely at least one corrective measure that must then be performed by the pilot of the helicopter 1. This is particularly advantageous in helicopters without autopilot system. However, in helicopters with an autopilot system the actuator 15 of Figure 2 may be provided and it may be activated by the pilot of the helicopter to instruct the yaw control computer to perform the at least one corrective measure automatically. This actuator may be a pushbutton, such as a so-called "panic" button.

Furthermore, in addition to the above-described alerts additional or alternative warnings or alerts may be provided, as described hereinafter at Figure 9.

Figure 9 shows a diagram 900 that comprises a simplified version of the diagram 600 of Figure 6 with the graph 601 and the pictograms 691, 693, 695, 697, 699 illustrating the helicopter headings and wind directions. Furthermore, a wind limitation diagram 910 is shown with a wind limitation graph 901 that is established for the helicopter 1 of Figure 1, by way of example. Moreover, wind limitation alerts 920 are shown, which are derived from the graph 601 and the graph 901. The wind limitation alerts 920 are illustratively divided into different zones similar to the stable and unstable zones 662, 661, 663. However, an additional alert zone 925 is shown, which overlaps partly the stable zone 662 and partly the unstable zone 661 and which is labelled as a "forbidden zone" due to the wind limitations of the helicopter 1 of Figure 1.

Having regard to the diagram 900, the yaw control computer 12 of Figure 2 may e. g. be configured to determine, based on current flight parameters, the wind limitations 901 of the helicopter 1 of Figure 1. In this case, the alerting means 27 of Figure 2 may alert at least a pilot of the helicopter 1 of Figure 1 e. g. if predefined wind limitations are exceeded, i. e. if the helicopter heading and the wind direction correspond to the forbidden zone 925.

Other variants are likewise possible. For instance, the unanticipated yaw prevention system 50 of Figure 1 and Figure 2 having the components described in Figure 2 to Figure 5 may be used in the helicopter 1 of Figure 1 for detecting a risk of unanticipated yaw in hover condition of the helicopter 1 of Figure 1 to enable improved unanticipated yaw awareness, as described in detail hereinafter by referring at the same time to Figure 1 to Figure 6:
More specifically, according to an aspect of the present invention operation of the unanticipated yaw prevention system 50 for preventing unanticipated yaw of the helicopter 1 in the flight condition comprises determining a current control setting of the yaw control member 210, determining a current reduced power or collective pitch used by the helicopter 1, determining current flight parameters based on the current flight parameter data provided by the sensor system 23, retrieving the predetermined relationship 111 from the database 11, and determining, based on the current reduced power or collective pitch used by the helicopter 1 and the current flight parameters, an applicable yaw control member graph 601 using the predetermined relationship 111. In this variant, the alerting means 27 may be configured for alerting at least a pilot of the helicopter 1 about an unanticipated yaw risk if the current control setting of the yaw control member 210 is above a maximum value or below a minimal value of the applicable yaw control member graph 601.

The yaw control computer 12 uses preferably current outside air temperature data, current outside air pressure data, current rotor speed data of the main rotor 3, and current rotor torque data of the main rotor 3 for determining the current reduced power used by the helicopter 1.

The current flight parameter data comprises preferably at least one of speed over ground data or Global Navigation Satellite System data. The current flight parameters may comprise one or more of rotorcraft mass, height over ground, outside temperature, air pressure, main rotor speed, main rotor torque or main rotor collective pitch. In addition, the current flight parameters may comprise one or more of wind strength or wind direction.

The maximum and minimal values are preferably defined by a 20 % margin around a control setting of the yaw control member in hover condition determined by the yaw control computer 12.

Furthermore, in analogy to the above described operations, the yaw control computer 12 may be configured to determine from the applicable yaw control member graph 601 stable and unstable yaw zones 661, 662, 663. The yaw control computer 12 may further be configured to determine current rotorcraft heading and wind directions 691, 693, 695, 697, 699, whereby the alerting means 27 may be configured to alert at least a pilot of the helicopter 1 if the current helicopter heading and wind directions 691, 693, 695, 697, 699 are associated with an unstable yaw zone 661, 663.

### Reference List

1 rotorcraft
2 fuselage
3 multi-blade main rotor
4 anti-torque tail rotor
5 engine
6 main power transmission gearbox
7 control panel
8 main rotor axis
10 rotorcraft systems
11 database
12 yaw control computer
13 calculation means
14 non-volatile memory
15 panic button
16 processor unit
20 system members
21 actuator
22 actuatable device
23 sensor system
24 control interfaces
25 information interfaces
26 status information means
27 alerting means
28 corrective measure indicating means
50 unanticipated yaw prevention system
91 information system
92 head-up display system
93 flight control system
94 autopilot system
95 navigation system
96 radio communication system
97 landing gear system
110 data files
111 predetermined relationship related to yaw movement control in windy condition
112 additional graphs
210 yaw control member
211 left pedal
212 right pedal
231 temperature sensor
232 air pressure sensor
233 yaw control member position detection system
234 rotor speed measurement sensor
235 air and wind data system
236 rotor torque measurement sensor
600 diagram
601 graphical representation of pedal position over rotorcraft heading with respect to wind
604 counter torque
608 main rotor rotation direction
609 fuselage torque
610 pedal position
620 rotorcraft heading with respect to wind
631 stable flight condition with headwind
632 change of incoming wind to the left side
635 corrective right pedal action
641 full left pedal position
643 full right pedal position
651 right yaw
653 left yaw
661, 663 unstable zones
662 stable zone
671 unrequired right pedal increase
673 begin of unanticipated yaw
675 stable flight condition with crosswind
677 required corrective measure
691, 699 rotorcraft with tailwind
693, 697 rotorcraft with crosswind
695 rotorcraft with headwind
700 diagram
701 graphical representation of pedal position in hover condition of the rotorcraft without wind with respect to reduced power used by the rotorcraft
710 pedal position 720 reduced power without wind 800 diagram
810, 820, 830 graphical representations of pedal positions over rotorcraft heading with respect to wind
825 detected pedal position
900 diagram
901 wind limitations
910 wind limitation diagram
920 wind limitation alerts
925 forbidden zone
931, 932 actuatable devices of a first type
933 controls
934 actuatable devices of a second type
935 actuators

## Claims

1. A rotorcraft (1), comprising:
a main rotor (3) that is at least configured to provide lift in flight condition of the rotorcraft (1);
an anti-torque rotor (4) that is at least configured to provide counter-torque for yaw movement control in the flight condition;
a yaw control member (210) that is linked to the anti-torque rotor (4) for commanding thrust generation of the anti-torque rotor (4); and
an unanticipated yaw prevention system (50) for preventing unanticipated yaw of the rotorcraft (1) in the flight condition, comprising:
a yaw control computer (12) configured to determine a current yaw rate of the rotorcraft (1) in the flight condition;
alerting means (27) configured to alert at least a pilot of the rotorcraft (1) if the current yaw rate exceeds a predetermined yaw rate threshold; and
corrective measure indicating means (28) configured to indicate at least one corrective measure, in particular a pilot action on the yaw control member (210), adapted for preventing unanticipated yaw of the rotorcraft (1) in the flight condition if the current yaw rate exceeds the predetermined threshold.

2. The rotorcraft (1) of claim 1, wherein the predetermined yaw rate threshold amounts to 60 °/s.

3. The rotorcraft (1) of claim 1 or 2, wherein the yaw control member (210) comprises a rudder control (211, 212); and wherein the corrective measure indicating means (28) is configured to indicate a request for applying yaw control to the left (211) or the right (212).

4. The rotorcraft (1) of any one of the preceding claims, further comprising a collective pitch control member (933) that is linked to the main rotor (3) for commanding collective pitch of the main rotor (3); wherein the corrective measure indicating means (28) is configured to indicate a request for acting on the collective pitch control member (933).

5. The rotorcraft (1) of claim 4, wherein the yaw control computer (12) is configured to determine a current height above ground of the rotorcraft (1) in the flight condition; and wherein the corrective measure indicating means (28) is configured to indicate the request for acting on the collective pitch control member (933) if the current height above ground exceeds a predetermined height threshold.

6. The rotorcraft (1) of any one of the preceding claims, wherein the corrective measure indicating means (28) is configured to indicate the at least one corrective measure using at least one of a visual, auditive, or haptic representation.

7. A rotorcraft (1), comprising:
a main rotor (3) that is at least configured to provide lift in flight condition of the rotorcraft (1);
an anti-torque rotor (4) that is at least configured to provide counter-torque for yaw movement control in the flight condition;
a yaw control member (210) that is linked to the anti-torque rotor (4) for commanding thrust generation of the anti-torque rotor (4);
a sensor system (23) comprising a plurality of sensors (231, 232, 233, 234, 235) which are configured to provide current flight parameter data; and
an unanticipated yaw prevention system (50) for preventing unanticipated yaw of the rotorcraft (1) in the flight condition, comprising:
a database (11) hosting a predetermined relationship (111) relating predefined positions of the yaw control member (210) to reduced power or collective pitch used by the rotorcraft (1) with respect to associated flight parameters;
a yaw control computer (12) configured for:
determining a current control setting of the yaw control member (210);
determining a current reduced power or collective pitch used by the rotorcraft (1);
determining current flight parameters based on the current flight parameter data provided by the sensor system (23);
retrieving the predetermined relationship (111) from the database (11); and
determining, based on the current reduced power or collective pitch used by the rotorcraft (1) and the current flight parameters, an applicable yaw control member graph (601) using the predetermined relationship (111); and
alerting means (27) configured for alerting at least a pilot of the rotorcraft (1) about an unanticipated yaw risk if the current control setting of the yaw control member (210) is above a maximum value or below a minimal value of the applicable yaw control member graph (601).

8. The rotorcraft (1) of claim 7, wherein the current flight parameters comprise one or more of rotorcraft mass, height over ground, outside temperature, air pressure, main rotor speed, main rotor torque or main rotor collective pitch.

9. The rotorcraft (1) of claim 8, wherein the current flight parameters comprise one or more of wind strength or wind direction.

10. The rotorcraft (1) of any one of claims 7 to 9, wherein the yaw control computer (12) is configured to determine from the applicable yaw control member graph (601) stable and unstable yaw zones (661, 662, 663).

11. The rotorcraft (1) of claim 10, wherein the yaw control computer (12) is configured to determine current rotorcraft heading and wind directions (691, 693, 695, 697, 699); and wherein the alerting means (27) is configured to alert at least a pilot of the rotorcraft (1) if the current rotorcraft heading and wind directions (691, 693, 695, 697, 699) are associated with an unstable yaw zone (661, 663).

12. The rotorcraft (1) of any one of claims 7 to 11, wherein the yaw control computer (12) is configured to determine, based on the current flight parameters, wind limitations (901) of the rotorcraft (1); and wherein the alerting means (27) is configured to alert at least a pilot of the rotorcraft (1) if predefined wind limitations are exceeded.

13. The rotorcraft (1) of any one of claims 7 to 12, wherein the yaw control computer (12) is configured for:
determining, based on the current flight parameters, whether the rotorcraft (1) is in the hover condition; and
if the rotorcraft (1) is in the hover condition:
retrieving a predetermined relationship (701) relating reduced power or collective pitch used by the rotorcraft (1) without wind in hover condition of the rotorcraft (1) to associated control settings of the yaw control member (210) from the database (11) for determining the applicable yaw control member graph (601).

14. The rotorcraft (1) of any one of claims 7 to 13, wherein the maximum and minimal values are defined by a 20 % margin around a control setting of the yaw control member in hover condition determined by the yaw control computer (12).

15. The rotorcraft (1) of any one of claims 7 to 14, wherein the current flight parameter data comprises at least one of speed over ground data or Global Navigation Satellite System data.

16. The rotorcraft (1) of any one of claims 7 to 15, wherein the yaw control member (210) comprises a rudder bar with a left pedal (211) and a right pedal (212); and wherein the current control setting of the yaw control member (210) is a current pedal position of the left and right pedals (211, 212) determined by the yaw control computer (12) using pedal position data provided by the sensor system (23).

17. The rotorcraft (1) of any one of claims 7 to 16, wherein the sensor system (23) comprises at least:
a temperature sensor (231) for determining current outside air temperature data;
an air pressure sensor (232) for determining current outside air pressure data; and
a rotor torque measurement sensor (236) for determining current rotor torque data of the main rotor (3).

18. The rotorcraft (1) of claim 17, wherein the yaw control computer (12) uses the current outside air temperature data, the current outside air pressure data, current rotor speed data of the main rotor (3), and the current rotor torque data of the main rotor (3) for determining the current reduced power used by the rotorcraft (1).

19. The rotorcraft (1) of any one of the preceding claims, wherein the unanticipated yaw prevention system (50) comprises an actuator (15) that is activatable by a pilot of the rotorcraft (1) to instruct the yaw control computer (12) to perform at least one corrective measure automatically.

20. The rotorcraft (1) of claim 19, wherein the actuator (15) is a pushbutton.
